# EUROPÄISCHE PATENTSCHRIFT

(11) **EP 0 498 916 B1**
(45) Veröffentlichungstag und Bekanntmachung des Hinweises auf die Patenterteilung: **20.12.1995**
(21) Anmeldenummer: 91102186.3
(22) Anmeldetag: 15.02.1991
(51) Int. Cl.: G01N 27/12

(54) **Verfahren zur Herstellung eines schnellen Sauerstoffsensors**
Production method for a fast response oxygen sensor
Méthode de production pour un capteur d'oxygène à réponse rapide

(43) Veröffentlichungstag der Anmeldung: 19.08.1992
(73) Patentinhaber: SIEMENS AKTIENGESELLSCHAFT, 80333 München (DE)
(72) Erfinder: Gerblinger, Josef, Dipl.-Phys., W-8900 Augsburg (DE); Meixner, Hans, Dipl.-Phys., W-8013 Haar (DE)

(56) Entgegenhaltungen:
- DE-A- 2 648 373
- GB-A- 2 142 147
- GB-A- 2 234 074
- US-A- 3 611 243

## Beschreibung

Die vorliegende Erfindung betrifft ein verfahren zur Herstellung eines Sauerstoffsensors.

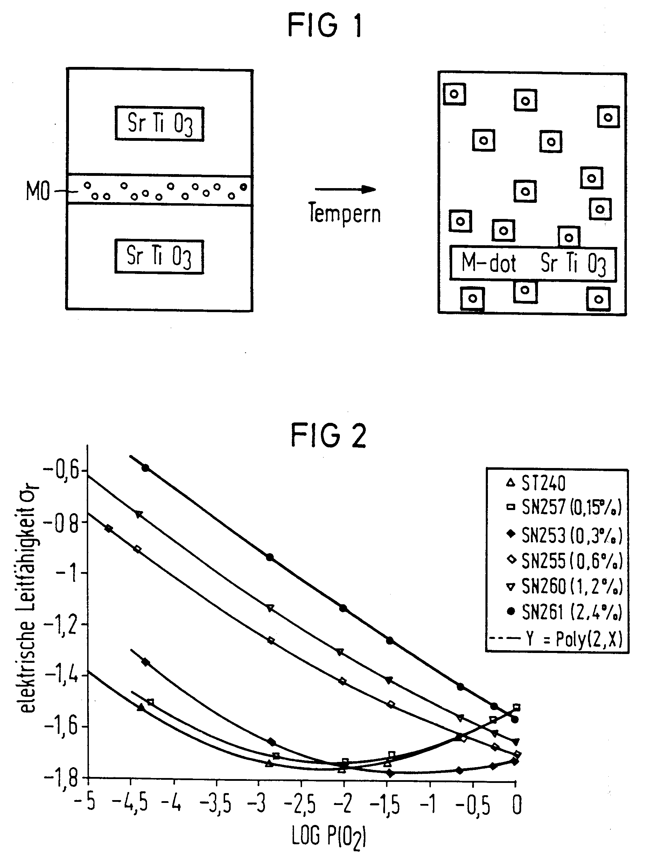

Sauerstoffsensoren auf der Basis undotierter Titanate (z.B. SrTiO₃) weisen sowohl als Bulkmaterial als auch als dünne Schichten beim Übergang von hohen (z.B. P(O₂) = 1bar) zu niedrigen Sauerstoffpartialdrücken (z.B. P(O₂) < 10⁻¹⁰bar) eine Änderung ihrer elektrischen Leitfähigkeit von p- nach n-Leitung auf (vgl. Figur 1). Werden derartige Sensoren in Umgebungen eingesetzt, in denen Atmosphären vorhanden sind, die im sensitiven Material sowohl p- als auch n- Leitung hervorrufen können, so ist eine Zweideutigkeit des Sensorsignals zu beobachten.

Sauerstoffsensoren auf Titanatabasis wurden bisher nicht in den zuvor genannten Atmosphären eingesetzt. Die bisher für diesen Anwendungsfall herangezogenen Sensormaterialien bestehen aus binären Metalloxiden (z.B. Nb₂O₅, TiO₂) Diese Materialien weisen zwar eindeutige Abhängigkeiten ihrer elektrischen Leitfähigkeit vom Sauerstoffpartialdruck auf, besitzen jedoch im Vergleich zu den Titanaten den Nachteil von zum Teil wesentlich längeren Ansprechzeiten bei Gaswechseln. Auch die Langzeitstabilität von binären Metalloxiden (z.B. TiO₂) bei Einsatztemperaturen der Sensoren bis 1000°C ist im Vergleich zu den Titanten (z.B. SrTiO₃) deutlich schlechter.

Aus dem Stand der Technik US-A-3 611 243 ist ein Gassensor zur Bestimmung des Sauerstoffpartialdrucks bekannt, bei dem das sauerstoffsensitive Material Titandioxid ist. Das durch z.B. AL³⁺, FE⁺, Fe²⁺, Co³⁺ oder Ni³⁺ verunreinigte TiO₂ wird mit Donatoren, z.B Nb₂O₅ dotiert. Damit wird bewirkt, daß die durch die Verunreinigung hervorgerufene p-Leitfähigkeit kompensiert wird.

Der vorliegenden Erfindung liegt die Aufgabe zugrunde, ein Verfahren zur Herstellung eines schnellen Sauerstoffsensors auf der Basis gesputterter Titanatschichten mit einer eindeutigen Abhängigkeit der elektrischen Leitfähigkeit vom Sauerstoffpartialdruck zu schaffen, wobei das Verfahren derart beschaffen sein soll, daß die erforderlichen dünnen Schichten möglichst einfach und gut reproduzierbar herstellbar sein sollen und wobei ein Sauerstoffsensor hergestellt werden kann, der in einem weiten Temperaturbereich bis maximal 1000°C arbeitet.

Zur Lösung der Aufgabe wird ein Verfahren gemäß Patentanspruch 1 vorgeschlagen.

Vorteilhafte Weiterbildungen der Erfindung sind durch die in den Unteransprüchen angegebenen Merkmale gekennzeichnet.

Im folgenden wird die vorliegende Erfindung anhand mehrerer Figuren im einzelnen beschrieben.

Figur 1 zeigt eine schematische Darstellung eines sog. Sandwich-Verfahrens zum Dotieren eines SrTiO₃-Körpers.

Figur 2 zeigt ein Diagramm mit einer Kurvenschar, aus dem die Einflüsse aus einer Donator-Dotierung auf die elektrische Leitfähigkeit von Strontium-Titanat hervorgeht.

Durch den Einbau von Donatoren in die Titanate A²⁺B⁴⁺O²⁻₃ verschiebt sich das Minimum der elektrischen Leitfähigkeit zu höheren Sauerstoffpartialdrücken hin. Die Ursache hierfür besteht darin, daß durch die Donatoren die im Titanat vorhandenen intrinsischen Akzeptoren (A²⁺-Leerstellen) kompensiert werden. Je nach Sensortemperatur kann eine minimal notwendige Donatorkonzentration bestimmt werden, die zur Eindeutigkeit deutigkeit der Kennlinie im betrachteten P(O₂)-Bereich führt. In Figur 2 ist dieser Effekt beispielhaft für N_{b}-dotiertes SrTiO₃ bei 1000°C gezeigt. In diesem Fall genügt eine Konzentration von 0,6% Niob, um eine eindeutige Abhängigkeit der elektrischen Leitfähigkeit vom Sauerstoffpartialdruck zu erreichen. Die Dotierungen werden mittels eines Sandwich-Verfahrens (vgl. Figur 1) durchgeführt. Aus Figur 1 ist ersichtlich, daß ein vorzugsweise durch Sputtertechnik hergestellter Mehrschichtenaufbau mit der Schichtfolge z.B. SrTiO₃-MO-SrTiO₃ verwendet wird. Durch einen geeigneten Tempervorgang diffundiert die MO-Schicht in die beiden SrTiO₃-Schichten ein und dotiert somit das Material.

Die wichtigste Voraussetzung zur Herstellung von dotierten SrTiO₃-Schichten im Sandwich-Verfahren besteht in der Kenntnis der Wachstumsraten sowohl des Grundmaterials (SrTiO₃) als auch des Dotierstoffes. Neben der mittleren Wachstumsrate Wₘ ist dabei auch vor allem die geometrische Verteilung der Wachstumsrate von Interesse.

Für das erfindungsgemäße Verfahren erfolgt der Einbau der Donatoren durch Dotieren, vorzugsweise durch N-b Dotieren. Der Vorgang des Dotierens wird im Zuge des Aufwachsens der dünnen Titanatschichten durchgeführt. Das Nb-Dotieren wird durch Herstellen des genannten Sandwich-Aufbaus mit der Schichtfolge Substrat-Titanat-Nb-Titanat und anschließendes Tempern des auf diese Weise hergestellten Mehrschichtenkörpers durchgeführt.

Die Dicke der dotierten Titanatschicht beträgt vorzugsweise maximal 1 »m. Für bestimmte Anwendungsfälle kann auch vorgesehen sein, daß die Dicke der dotierten Titanatschicht vorzugsweise maximal 5 »m beträgt.

Durch das erfindungsgemäße Verfahren ist ein schneller Sauerstoffsensor auf der Basis gesputterter Titanatschichten mit einer eindeutigen Abhängigkeit der elektrischen Leitfähigkeit vom Sauerstoffpartialdruck ermöglicht.

## Patentansprüche

1. Verfahren zur Herstellung eines schnellen Sauerstoffsensors,
- bei dem eine erste Titanatschicht erzeugt wird,
- bei dem auf die erste Titanatschicht eine Donatorschicht aufgebracht wird,
- bei dem auf die Donatorschicht eine zweite Titanatschicht aufgebracht wird, und
- bei dem die Schichten getempert werden, um die Donatoren der Donatorschicht in die Titanatschichten einzubauen sodaß sich das Minimum der elektrischen Leitfähigkeit der Titanatschicht in Abhängigkeit vom Sauerstoffpartialdruck zu höheren Partialdrücken hin verschiebt und sich somit eine eindeutige Abhängigkeit der elektrischen Leitfähigkeit vom Sauerstoffpartialdruck ergibt.

2. Verfahren nach Anspruch 1,
bei dem als Donator Nb verwendet wird.

3. Verfahren nach einem der Ansprüche 1 oder 2,
bei dem die Titanatschichten durch Sputtern hergestellt werden.

4. Verfahren nach einem der Ansprüche 1 - 3,
bei dem die Dicke der dotierten Titanatschicht maximal 5 »m beträgt.

## Claims

1. Method for the production of a fast oxygen sensor,
- in which a first titanate layer is produced,
- in which a donor layer is applied to the first titanate layer,
- in which a second titanate layer is applied to the donor layer, and
- in which the layers are tempered in order to incorporate the donors of the donor layer into the titanate layers, with the result that the minimum of the electrical conductivity of the titanate layer is shifted to higher partial pressures as a function of the oxygen partial pressure, thus producing an unambiguous dependence of the electrical conductivity on the oxygen partial pressure.

2. Method according to Claim 1,
in which Nb is used as the donor.

3. Method according to one of Claims 1 or 2,
in which the titanate layers are produced by sputtering.

4. Method according to one of Claims 1 - 3,
in which the thickness of the doped titanate layer is at most 5 »m.

## Revendications

1. Procédé de fabrication d'un capteur d'oxygène à réponse rapide qui consiste à
- produire une première couche de titanate,
- déposer une couche de donneur sur la première couche de titanate,
- déposer une deuxième couche de titanate sur la couche de donneur, et
- recuire les couches pour incorporer les donneurs de la couche de donneur aux couches de titane de manière à décaler le minimum de la conductivité électrique de la couche de titane en fonction de la pression partielle d'oxygène vers les pressions partielles plus élevées et à obtenir ainsi une variation univoque de la conductivité électrique en fonction de la pression partielle d'oxygène.

2. Procédé suivant la revendication 1, qui consiste à utiliser comme donneur Nb.

3. Procédé suivant l'une des revendications 1 ou 2, qui consiste à fabriquer les couches de titane par pulvérisation cathodique.

4. Procédé suivant l'une des revendications 1 à 3, dans lequel l'épaisseur de la couche de titanate dopé est au maximum de 5 microns.
